# EUROPÄISCHE PATENTSCHRIFT

(11) **EP 1 344 477 B1**
(45) Veröffentlichungstag und Bekanntmachung des Hinweises auf die Patenterteilung: **10.08.2005**
(21) Anmeldenummer: 03002422.8
(22) Anmeldetag: 05.02.2003
(51) Int. Cl.: A47J 31/44

(54) **Vorrichtung zur Erzeugung von Milchschaum für Cappucino**
Device for producing frothed milk for cappuccino
Dispositif pour produire du lait moussé pour cappuccino

(30) Priorität: 13.03.2002 DE 20204085 U
(43) Veröffentlichungstag der Anmeldung: 17.09.2003
(73) Patentinhaber: Eugster/Frismag AG, 8590 Romanshorn (CH)
(72) Erfinder: Mahlich, Gotthard, 61476 Kronberg/Ts. (DE)
(74) Vertreter: Schubert, Siegmar, Dipl.-Ing.

(56) Entgegenhaltungen:
- EP-A- 0 858 757
- WO-A-97/39668
- DE-A- 19 705 633
- US-A- 5 423 245

## Beschreibung

Die Erfindung betrifft eine Vorrichtung zur Erzeugung von Milchschaum für Cappuccino nach dem Oberbegriff des Anspruchs 1.

Bei einer derartigen bekannten Vorrichtung, die mit einer Espressomaschine in Verbindung steht und deren Dampfgenerator nutzt, ist stromabwärts einer Dampfzuleitung eine Düsenanordnung mit einer Unterdruckkammer angeordnet, in die eine Dampf-Düsenöffnung geöffnet ist (EP-A-0 858 757). An dem gegenüber der Dampf-Düsenöffnung entfernten Unterdruckkammerausgang ist die Unterdruckkammer annähernd konusförmig verjüngt und mündet in eine einzige Bohrung als Beruhigungsstrecke. In einen zylindrischen Abschnitt der Unterdruckkammer zwischen der Dampf-Düsenöffnung und dem Unterdruckkammerausgang mündet eine Zuleitung eines Luft-Milchgemischs. Die Vormischkammer ist insbesondere zylindrisch mit einem gegenüber der Zuleitung des Luft-Milchgemischs größeren Durchmesser ausgebildet und mit einem Luftkanal sowie einer Milchzuleitung verbunden. In dieser Vormischkammer wird zunächst ein Luft-Milchgemisch gebildet, welches in die Unterdruckkammer einströmt. Dort wird Dampf zugemischt, der auch den Unterdruck in der Unterdruckkammer erzeugt. Das dadurch entstehende Dampf-Luft-Milchgemisch durchströmt anschließend die Beruhigungsstrecke, in der es komprimiert und beruhigt wird, so daß es in der gewünschten Konsistenz als Milchschaum aus der Beruhigungsstrecke austritt. Bevorzugt ist ein Durchmesser-/Längenverhältnis der einzigen Bohrung, die die Beruhigungsstrecke bildet, von 1:10.

Um eine gute Beruhigungswirkung des Dampf-Luft-Milchgemischs bei genügendem Durchsatz zu erreichen, ist die Beruhigungsstrecke in Relation zu den anderen Elementen der Vorrichtung, auch den Abmessungen der Unterdruckkammer, verhältnismäßig lang.

Bekannt ist auch ein Kaffeefilterhalter mit einem Kaffeefilter, um Milchkaffee mit einer feinporigen Schaumschicht zu erzeugen (WO 97/39668 A). In den Filterhalter kann ein Kaffeeportionsbeutel eingelegt werden, dessen Ober-seite und Boden im wesentlichen aus Filterpapier bestehen. Unterhalb des Kaffeeportionsbeutels ist eine geschlitzte Trennplatte so angeordnet, daß zwischen ihr und dem Boden des Kaffeeportionsbeutels ein freier Raum gebildet wird. Unterhalb der geschlitzten Zwischenplatte bildet der becherförmige Kaffeefilterhalter einen Zwischenraum über einem Boden, der zwei Auslaßöffnungen aufweist. Jede der Auslaßöffnungen ist in vier Teilöffnungen unterteilt, von denen jede eine Durchflußoberfläche mit einem Durchmesser von beispielsweise 1 - 5 mm bildet. Dabei kann der Durchmesser der Auslaßöffnung insgesamt ca. 6 mm betragen. - Wenn durch den Filterbeutel Brühwasser gedrückt wird, baut sich in dem freien Raum über der geschlitzten Platte ein Flüssigkeitsdruck auf, welcher Kaffeeextrakt durch die geschlitzte Platte in den Zwischenraum drückt, in dem Blasen entstehen. Es können nur solche Blasen aus dem Kaffeefilterhalter strömen, die kleinere Abmessungen als die Auslaßöffnungen bzw. deren Teilöffnungen aufweisen. - Somit handelt es sich gattungsmäßig nicht um eine Vorrichtung zur Erzeugung von Milchschaum für Cappuccino mit einer stromabwärts einer Dampfzuleitung angeordneten Düsenanordnung mit einer mischenden Unterdruckkammer, aus deren Ausgang Dampf-Luft-Milchgemisch mit so hoher Strömungsenergie austritt, daß dieses beruhigt werden muß, um eine Milchschaumzerstörung zu verringern bzw. zu vermeiden. Vielmehr haben die bekannten Auslaßöffnungen nur eine Siebwirkung, um Blasen unerwünscht großer Abmessungen zurückzuhalten. Hierzu kommt es nicht auf eine Länge oder Strecke an, die das Gemisch in den Auslaßöffnungen zurückzulegen hat.

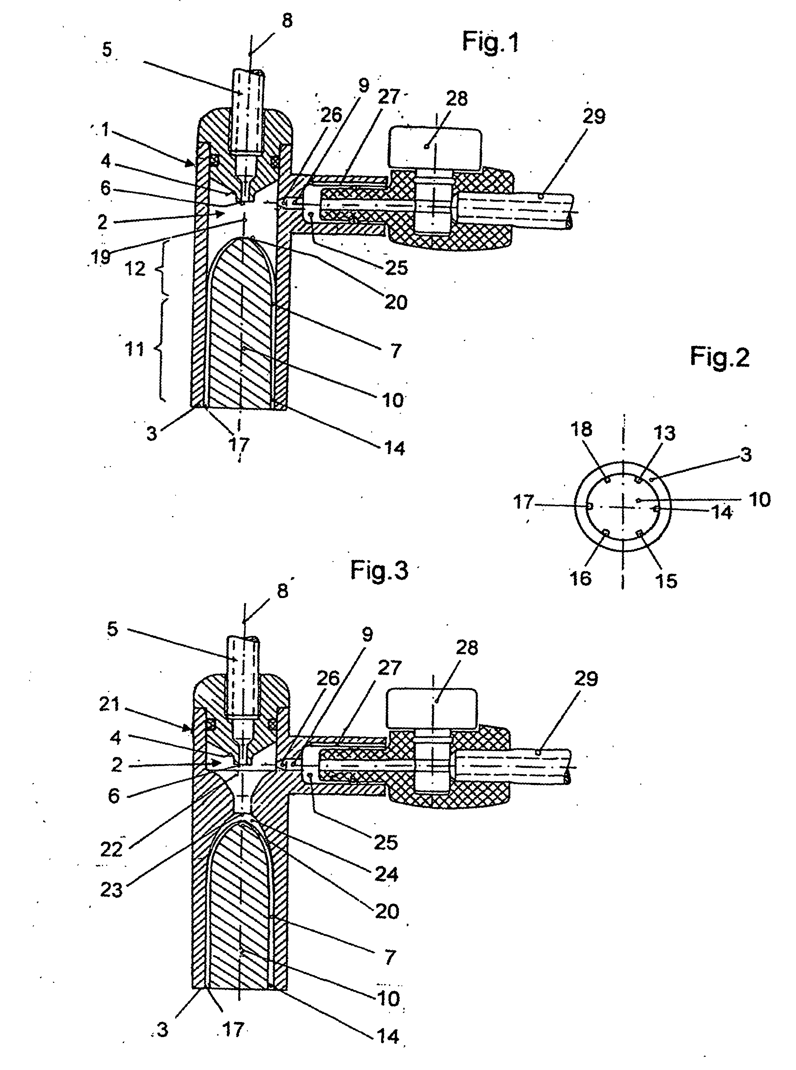

Zum Stand der Technik gehört auch eine Milchschäumvorrichtung, mit der Dampf, Milch und Luft innig durchmischt werden sollen (US-A-5 423 245). Hierzu ist eine mischende Baugruppe vorgesehen, mit der durch jeweils einen Strömungsweg eingeleiteter Dampf, Milch und Luft zusammengebracht werden, indem Milch und Luft durch Venturi-Wirkung eines Dampfstrahls angesaugt werden. Die zusammengebrachten Mischungsbestandteile werden anschließend in einer an die Baugruppe angebrachten Wirbelkammer weiter innig durchmengt. Eine Abgaberöhre zur Abgabe des Milchschaums ist quer zu einer horizontalen Hauptachse der Baugruppe an der Wirbelkammer nach unten orientiert montiert, wobei die Hauptachse der Baugruppe in der Richtung liegt, in der in diese der Dampf einströmt. Es erfolgt dadurch eine Umlenkung der Strömungsrichtung und eine weitere Abschwächung der Strömungsenergie des Dampfs. Ein Hohlraum in der Abgaberöhre ist durch ein sich unten verjüngendes Laminatorblech mit zwei ebenen Oberflächen in zwei Kammern unterteilt, von denen eine eine Ausnehmung gegenüber einer Laminatorblechebene aufweist, welche die Bildung einer Blasenoberfläche des in der Abgaberöhre herabfließenden Milchschaums verhindern soll. Die ebenen Oberflächen des Laminatorblechs sollen für einen säulenförmigen Abfluß zu einer Abgabeöffnung sorgen, wobei an dem unteren Ende des Laminatorblechs der Abfluß zusammengeschnürt wird. - Gemäß den Figuren 3 und 4 ist die Länge der beiden Kammern in der Abgaberöhre verhältnismäßig klein, aber deren lichte Querschnittsfläche zu groß, um eine ausreichende Beruhigungswirkung auf den abfließenden Milchschaum zu erzielen, vor allem dann, wenn diese Abgaberöhre direkt an einem Ausgang einer mischenden Unterdruckkammer eingesetzt würde, in die eine Dampf-Düsenanordnung geöffnet ist.

Letzteres gilt auch für ein bekanntes Trennblech, welches in einen zylindrischen Innenraum einer sogenannten Emulgierkammer mit einer Abgabeöffnung ragt, wobei tangential an der Emulgierkammer ein Ansatz mit einer durch einen Dampfstrom mittels Venturi-Effekt Milch und Luft ansaugenden Saugkammer angeordnet ist (EP-B-0 195 750). In der Emulgierkammer soll das aus der Saugkammer stammende Gemisch in eine turbulente Strömung versetzt werden, das dann aus der Abgabeöffnung entlassen wird. - Das oben erwähnte Trennblech soll dazu dienen, die Dampf-, Milch- und Luftpartikel besser zu mischen und eine Rotation der Mischung mit zu hoher Abgabegeschwindigkeit zu verhindern.

Schließlich gehört eine Vorrichtung zur Erzeugung von Milchschaum für Cappuccino mit einer Düsenanordnung und einer Unterdruckkammer zum Stand der Technik, bei der ein Innenraum der Düsenanordnung unten mit einer Leitschaufelanordnung nach außen teilweise abgeschlossen ist (DE-A-197 05 633). Ein in die Leitschaufelanordnung eingesetzter Führungsstift, der nach unten in einen unteren Abschnitt eines Wirbelstutzens ragt, soll eine Anlage des aus der Leitschaufelanordnung austretenden Milchschaums und ein gutes Auslaufverhalten hervorrufen. Trotz des Führungsstifts handelt es sich jedoch nur um einen einzigen Auslaufkanal in dem Wirbelstutzen.

Der vorliegenden Erfindung liegt daher die Aufgabe zugrunde, eine kompakte Vorrichtung der eingangs genannten Gattung fertigungsgünstig herzustellen, mit der ein Dampf-Luft-Milchgemisch in der gewünschten Konsistenz als Milchschaum gebildet wird.

Diese Aufgabe wird erfindungsgemäß durch eine Ausbildung der Vorrichtung mit den Merkmalen des Anspruchs 1, insbesondere dessen kennzeichnenden Teils gelöst.

Danach besteht die Beruhigungsstrecke aus mindestens 3 Beruhigungskanälen, die strömungsmäßig parallel angeordnet sind, indem ihre Eingänge an dem Unterdruckkammerausgang miteinander in Verbindung stehen, wobei die Ausgänge der Beruhigungskanäle sämtlich offen sind und somit Abgabeöffnungen für das gebildete Dampf-Luft-Milchgemisch bzw. den Milchschaum darstellen. Mit diesen wird das Dampf-Luft-Milchgemisch, welches in der Unterdruckkammer erzeugt wird, an dessen Ausgang in eine der Anzahl der Beruhigungskanäle entsprechende Anzahl Teilströme aufgeteilt, wobei der Durchmesser jedes der Beruhigungskanäle verhältnismäßig klein ist, so daß deren Länge zum Erreichen eines gewünschten Durchmesser-/Längenverhältnisses, das zur Kompression und Beruhigung des Dampf-Luft-Milchgemischs zu erreichen ist, ebenfalls verhältnismäßig klein sein kann, daß also das die Beruhigungskanäle umfassende Bauteil kompakt sein kann. Darüber hinaus sind die Beruhigungskanäle für eine besonders kompakte Anordnung räumlich im wesentlichen parallel angeordnet.

Sie sind herstellungsgünstig aus einem Füllkern ausgeformt, der getrennt von der Düsenanordnung gefertigt und anschließend stromabwärts der Unterdruckkammer in die Düsenanordnung eingesetzt ist.

Um trotz kompakter, kurzer Ausbildung der Beruhigungsstrecke die gewünschte Konsistenz des Dampfluftmilchgemischs zu erhalten, welches als Milchschaum aus der Beruhigungsstrecke austritt, soll der lichte Durchmesser jedes Beruhigungskanals einen Betrag nicht überschreiten, der sich aus dem Durchmesser-/Längenverhältnis der Beruhigungsstrecke von 1 zu mindestens 10, insgesamt geteilt durch die Anzahl der Beruhigungskanäle ergibt, aus denen sich die Beruhigungsstrecke zusammensetzt.

Gemäß Anspruch 2 sind die mindestens 3 strömungsmäßig parallelen Beruhigungskanäle mit untereinander gleichen Strömungsquerschnitten und zweckmäßig in zueinander gleichen Abständen vorgesehen.

Der Mischvorgang des Dampf-Luft-Milchgemischs, welches aus der mischenden Unterdruckkammer strömt, ist bereits beim Eintritt in die Beruhigungskanäle abgeschlossen, zumal keine Stromröhre eines Beruhigungskanals mit einer Stromröhre eines benachbarten Beruhigungskanals in Verbindung steht. Aus dem letztgenannten Grund wird in den Beruhigungskanälen eine effektive Beruhigung des Gemisches erreicht. Die Aufteilung der Beruhigungsstrecke in mehrere Kanäle mit jeweils einem wesentlich kleineren Querschnitt gegenüber einem einzigen Beruhigungskanal hat außerdem den Vorteil, daß diese Anordnung als ein Blasensieb wirkt, welches das Austreten von während des Mischvorgangs in der Unterdruckkammer entstandenen größeren Schaumblasen verhindert und damit zu einem besonders feinporigen und standfesten Milchschaum beiträgt.

Zur Herstellung, aber auch zur Wartung, kann es weiter günstig sein, wenn nach Anspruch 3 die Beruhigungskanäle außen aus dem zylindrischen Füllkern koaxial zu dessen Rotationssymmetrieachse und in gleichen Umfangsabständen ausgeformt sind. Es sei bemerkt, daß nach Montage des Füllkerns dessen Rotationssymmetrieachse mit derjenigen des zylindrischen Raums der Düsenanordnung übereinstimmt.

In einer Weiterbildung gemäß Anspruch 4 kann der Füllkern mit einem zylindrischen Hauptabschnitt und einem nach Montage in der Unterdruckkammer dieser zugewandten domförmigen Ende ausgebildet sein, wobei die außen aus dem zylindrischen Hauptabschnitt ausgeformten Beruhigungskanäle weiter an dem domförmigen Ende, und zwar dort elliptisch vertieft verlaufen. Die Vertiefung erstreckt sich dabei also in Richtung zur Mittelachse bzw. Rotationssymmetrieachse des Füllkerns. Damit wird eine gleichmäßige gute Strömungseinleitung in die Beruhigungskanäle erzielt.

Bevorzugt besteht der Unterdruckkammerausgang einfach nach Anspruch 5 aus den strömungsmäßig parallel liegenden Beruhigungskanälen selbst, d.h. es sind zwischen der Unterdruckkammer und den Beruhigungskanälen keine weiteren strömungsbeeinflussende Strukturen eingefügt.

Hierzu ist die Vorrichtung fertigungsgünstig im einzelnen nach Anspruch 6 mit einem zylindrischen Raum in der Düsenanordnung ausgebildet, der die mischende Unterdruckkammer und die deren Ausgang konstituierende Beruhigungskanäle umfaßt.

Speziell kann nach Anspruch 7 der Füllkern in einem unteren Abschnitt des zylindrischen Raums in der Düsenanordnung eingesetzt sein.

Ein weiterer Vorteil besteht darin, daß der Füllkern, beispielsweise zu Reinigungszwecken oder zum Ersatz, einfach aus dem unteren Abschnitt des zylindrischen Raums entfernt werden kann.

Wie oben erwähnt, ist die Mischung des Dampf-Luft-Milchgemischs abgeschlossen, wenn dieses in die Beruhigungskanäle eintritt. Zu dieser Durchmischung dient außer der Vormischkammer eine Ausbildung der Vorrichtung nach Anspruch 9, wonach die Düsenöffnung in der Düsenanordnung an einem oberen, ersten Ende der Unterdruckkammer angeordnet ist, welches dem unteren, zweiten Ende der Unterdruckkammer gegenüberliegt, an dem sich der Unterdruckkammerausgang mit den Beruhigungskanälen befindet. Bei dieser Anordnung der Düsenöffnung erfolgt eine Durchmischung des Luft-Milchgemischs, das vorgemischt über eine vorzugsweise düsenförmige Zuleitung in die Unterdruckkammer eingesaugt wird, mit dem aus der Düsenöffnung austretenden Dampf über eine große Strecke der Unterdruckkammer.

Zwei Ausführungsformen der Erfindung werden im folgenden anhand einer Zeichnung mit zwei Figuren erläutert. Es zeigt:
- Figur 1: einen Längsschnitt durch eine erste/bevorzugte Ausführungsform des erfindungswesentlichen Teils der Vorrichtung zur Erzeugung von Milchschaum für Cappuccino,
- Figur 2: eine Aussicht auf die erste Ausführungsform von unten und
- Figur 3: einen Längsschnitt durch eine zweite Ausführungsform.
Die erste Ausführungsform gemäß Figur 1 umfaßt eine Düsenanordnung 1, die einen zylindrischen Raum 2 umschließt, der an einem unteren Ende 3 ursprünglich offen ist. An einem dem unteren Ende 3 gegenüberliegenden oberen Ende 4 weist der dort im wesentlichen geschlossene zylindrische Raum 2 strömungsmäßig stromabwärts einer Dampfzuleitung 5 eine Düsenöffnung 6 auf. Das obere Ende 4 wird auch als das erste Ende bezeichnet und das untere Ende 3 als das zweite Ende. - Die Düsenanordnung 1 mit dem zylindrischen Raum 2 und der Düsenöffnung 6 ist im wesentlichen rotationssymmetrisch um eine Rotationssymmetrieachse 8 ausgebildet.

In den zylindrischen Raum 2 mündet in der Nähe dessen oberen Endes 4 eine Zuleitung 9 für ein Luft-Milchgemisch, welches in einer Vormischkammer erzeugt wird, deren Ausgang mit der Zuleitung 9 verbunden ist. In die Vormischkammer enden eine Milchzuleitung sowie ein Luftkanal.

In einem sich an das untere Ende 3 des zylindrischen Raums 2 nach oben anschließenden Abschnitt 7, der auch als unterer Abschnitt bezeichnet wird, ist ein Füllkern 10 eingesetzt. Der Füllkern ist mit einem im wesentlichen zylindrischen Hauptabschnitt 11 und einem oberen domförmigen Abschnitt 12 ausgebildet. Aus beiden Abschnitten 11 und 12 des Füllkerns sind sechs durchgängige Beruhigungskanäle 13 bis 18 ausgeformt, und zwar konzentrisch zu der Rotationssymmetrieachse 8 und in gleichen Umfangsabständen zueinander, siehe Figur 2. Wie Figur 1 im einzelnen zeigt, sind die Strömungskanäle, dort 14 und 17, über den zylindrischen Hauptabschnitt 11 mit gleicher radialer Tiefe ausgebildet und über den domförmigen Abschnitt 12 leicht elliptisch zu der Mittelachse bzw. Rotationssymmetrieachse 8 hin vertieft. Die Beruhigungskanäle 13 bis 18 sind somit strömungsmäßig und im wesentlichen auch geometrisch parallel zueinander angeordnet.

Wenn in die beschriebene Düsenanordnung 1 über die Dampfzuleitung 5 Dampf zugeführt wird, entsteht infolge der gezeigten Ausbildung der Düsenanordnung 1 in einem oberen Abschnitt des zylindrischen Raums 2 oberhalb des durch den Füllkern 10 ausgefüllten unteren Abschnitts 7 ein Unterdruck infolge des aus der Düsenöffnung 6 ausströmenden Dampfes. Der obere Abschnitt ist somit eine Unterdruckkammer 19, die einerseits an dem oberen Ende 4 der zylindrischen Kammer 2 und andererseits an einer Oberseite 20 des Kerns 10 weitgehend abgeschlossen ist. Der Unterdruck in der Unterdruckkammer 19 pflanzt sich über die Zuleitung 9 in die Vormischkammer 25 fort, in die deswegen Milch und Luft gesaugt werden und sich in dieser vermischen. Die dadurch entstehende Luft-Milch-Vormischung wird über die düsenförmige Zuleitung 9 in die Unterdruckkammer 19 gesaugt, wo sie sich mit dem in die Unterdruckkammer 19 einströmenden Dampf bis zu der Oberseite 20 des Füllkerns 10 innig zu einer Dampf-Luft-Milchmischung vermischt. Die Unterdruckkammer 19 wird daher auch als mischende Unterdruckkammer bezeichnet.

Das mit der Luft-Milch-Vormischung in der Unterdruckkammer 19 gebildete Dampf-Luft-Milchgemisch bedarf keiner weiteren Mischung, sondern nur einer Beruhigung und teilweisen Verdichtung, damit es als Milchschaum für Cappuccino gewünschter Konsistenz aus Abgabeöffnungen der Vorrichtung nach außen ausströmt. Die Abgabeöffnungen werden durch die offenen Beruhigungskanäle 13 bis 18 an dem unteren Ende 3 der Düsenanordnung 1 bzw. des zylindrischen Raums 2 gebildet.

Infolge der untereinander gleichen Ausbildung der lichten Querschnitte der Beruhigungskanäle 13 bis 18 und deren symmetrischer Anordnung zu der Rotationssymmetrieachse 8 werden sämtliche Beruhigungskanäle praktisch gleichmäßig mit Dampf-Luft-Milchgemischteilströmen direkt aus der mischenden Unterdruckkammer 19 beaufschlagt. Diese Dampf-Luft-Milchgemischteilströme werden in den einzelnen Beruhigungskanälen wirkungsvoll beruhigt und komprimiert, da deren Durchmesser bzw. lichte Querschnitte im Verhältnis zu deren Länge, die sich über den zylindrischen Hauptabschnitt und den domförmigen Abschnitt jedes Beruhigungskanals erstreckt, klein sind. Zur Definition der Durchmesser bzw. Querschnitte können tatsächlich ausgeformte, beispielsweise halbkreisförmige oder quadratische Querschnitte der Beruhigungskanäle durch gedachte Kreisquerschnitte angenähert werden.

Es hat sich herausgestellt, daß durch die in Figuren 1 und 2 gezeigte Ausführungsform, bei der die Beruhigungskanäle 13 bis 18 unmittelbar einen Ausgang mit Abgabeöffnungen der Unterdruckkammer 19 nach außen bilden, ein feinporiger und sehr standfester Milchschaum erzeugt wird. Dabei kann der Durchsatz durch die Beruhigungskanäle insgesamt größer sein als bisher üblich. Der größere Durchsatz hat den Vorteil, daß die Strömungsgeschwindigkeit am Ausgang der Beruhigungskanäle geringer ist und ein am Schluß des Schäumens auftretender Restdampfstrahl den erzeugten und unter den Abgabeöffnungen aufgefangenen Schaum weniger beeinträchtigt. Andererseits kann die Anzahl der Beruhigungskanäle bei gleich bleibender Dimensionierung reduziert werden, wenn ein geringerer Durchsatz gewünscht wird.

Die Ausführungsform nach Figur 1 hat den fertigungstechnischen Vorteil, daß die mischende Unterdruckkammer einfach aus einem Abschnitt des durchgängig zylindrischen Raums 2 der Düsenanordnung 1 mit einem weitgehenden Abschluß an seinem oberen Ende ausgeformt ist, der ausgangsseitig unkompliziert durch den in ihm eingesetzten Füllkern 10 weitgehend abgeschlossen wird. Die düsenförmige Zuleitung 9 ist vorzugsweise durch eine Luft-Milchdüse 26 an der Unterdruckkammer 19 realisiert.

Die in Figur 3 dargestellte zweite Ausführungsform der Vorrichtung unterscheidet sich von der ersten Ausführungsform durch die Ausbildung der Düsenanordnung 21 mit einer im wesentlichen zylindrischen Unterdruckkammer 22, die einen innen konusförmigen Abschnitt mit einer zentralen Öffnung 23 oberhalb der Oberseite 20 des Füllkerns 10 aufweist. Der Füllkern 10 ist ebenso wie derjenige in den Figuren 1 und 2 geformt. Der Füllkern 10 ist in einen ebenfalls domförmigen Abschnitt 24, der unterhalb der Öffnung 23 angeordnet ist, eingesetzt. Da sich die Beruhigungskanäle 13 bis 18 des Füllkerns 10 hier unterhalb des konusförmigen Abschnitts direkt an die Öffnung 23 anschließen, stellt diese einen Anfang einer Beruhigungsstrecke dar, die durch die parallelen Beruhigungskanäle 13 bis 18 gebildet wird. Die ebenso wie in der obigen ersten Ausführungsform mischende Unterdruckkammer 22 weist somit ebenfalls einen Ausgang mit Beruhigungskanälen 13 bis 18 auf, welche die Abgabeöffnungen an ihrem unteren Ende bilden.

Auch bei dieser Ausführungsform wird das Dampf-Luft-Milchgemisch mit der Luft-Milchvormischung in der mischenden Unterdruckkammer 22 erzeugt, von der die düsenförmige Zuleitung 9 mit der Luft-Milchdüse 26 zu der Unterdruckkammer 22 führt. Anschließend erfolgen in dem Unerdruckkammerausgang, bestehend aus der Öffnung 23 und den Beruhigungskanälen 13 bis 18, nur noch eine Kompression und eine Beruhigung dieses Gemischs, welches als Milchschaum von den durch die unten offenen Beruhigungskanäle gebildeten Abgabeöffnungen nach außen abgegeben wird.

### Bezugszahlen

- 1: Düsenanordnung
- 2: zylindrischer Raum
- 3: unteres zweites Ende
- 4: oberes erstes Ende
- 5: Dampfzuleitung
- 6: Düsenöffnung
- 7: unterer Abschnitt des zylindrischen Raums
- 8: Rotationssymmetrieachse
- 9: Zuleitung
- 10: Füllkern
- 11: zylindrischer Hauptabschnitt
- 12: domförmiger Abschnitt
- 13: Beruhigungskanal
- 14: Beruhigungskanal
- 15: Beruhigungskanal
- 16: Beruhigungskanal
- 17: Beruhigungskanal
- 18: Beruhigungskanal
- 19: Unterdruckkammer (oberer Abschnitt des zylindrischen Raums)
- 20: Oberseite
- 21: Düsenanordnung
- 22: Unterdruckkammer
- 23: Öffnung
- 24: domförmiger Abschnitt
- 25: Vormischkammer
- 26: Luft-Milchdüse
- 27: Luftkanal
- 28: Milchmengenregler
- 29: Milchleitung

## Patentansprüche

1. Vorrichtung zur Erzeugung von Milchschaum für Cappuccino mit einer stromabwärts einer Dampfzuleitung angeordneten Düsenanordnung (1, 21) mit einer mischenden Unterdruckkammer (19, 22), in die eine Dampf-Düsenöffnung (6) geöffnet ist und in die eine Zuleitung (9) eines Luft-Milchgemisches aus einer Vormischkammer mündet, wobei die Vormischkammer mit einem Luftkanal und einer Milchzuleitung verbunden ist, sowie mit einer Beruhigungsstrecke an einem Unterdruckkammerausgang, wobei ein Ende der Beruhigungsstrecke wenigstens eine Abgabeöffnung zur Abgabe von Dampf-Luft-Milchgemisch nach außen bildet,
**dadurch gekennzeichnet,**
**daß** die Beruhigungsstrecke wenigstens drei strömungsmäßig parallele Beruhigungskanäle (13 bis 18) umfaßt, die an einem offenen Ende jeweils eine Abgabeöffnung zur Abgabe eines Dampf-Luft-Milchgemischteilstroms nach außen bilden,
**daß** die Beruhigungskanäle (13 bis 18) aus einem im wesentlichen zylindrischen Füllkern (10) räumlich im wesentlichen parallel zueinander ausgeformt sind, der stromabwärts der Unterdruckkammer (19, 22) in die Düsenanordnung (1) eingesetzt ist, und
**daß** der lichte Durchmesser des Querschnitts jedes der Beruhigungskanäle (13 bis 18) in einem Verhältnis zu dessen Länge dimensioniert ist, das 1 zu mindestens 10, insgesamt geteilt durch die Anzahl der Beruhigungskanäle (13 bis 18) ist.

2. Vorrichtung nach Anspruch 1,
**dadurch gekennzeichnet,**
**daß** die mindestens drei Beruhigungskanäle (13 bis 18) mit im wesentlichen untereinander gleichen Strömungsquerschnitten und in zueinander gleichen Abständen vorgesehen sind.

3. Vorrichtung nach wenigstens einem der Ansprüche 1 und 2,
**dadurch gekennzeichnet,**
**daß** die Beruhigungskanäle (13 bis 18) außen aus dem im wesentlichen zylindrischen Füllkern (10) in gleichen Umfangsabständen und im wesentlichen parallel zu einer Rotationssymmetrieachse (8) des Füllkerns ausgeformt sind.

4. Vorrichtung nach wenigstens einem der Ansprüche 1 bis 3,
**dadurch gekennzeichnet,**
**daß** der Füllkern (10) mit einem zylindrischen Hauptabschnitt (11) und einem der Unterdruckkammer (19, 22) zugewandten domförmigen Ende (12) ausgebildet ist und daß die aus dem zylindrischen Hauptabschnitt ausgeformten Beruhigungskanäle (13 bis 18) sich über den domförmigen Abschnitt (12) erstrecken und in diesem elliptisch vertieft verlaufen.

5. Vorrichtung nach wenigstens einem der Ansprüche 1 - 4,
**dadurch gekennzeichnet,**
**daß** der Unterdruckkammerausgang aus den strömungsmäßig parallel liegenden Beruhigungskanälen (13 - 18) besteht.

6. Vorrichtung nach wenigstens einem der Ansprüche 1 bis 4,
**dadurch gekennzeichnet,**
**daß** die Düsenanordnung (1) einen zylindrischem Raum (2) umfaßt, daß ein oberes Ende des zylindrischen Raums (2) mit Ausnahme der Düsenöffnung geschlossen ist, daß an einem dem oberen Ende (4) gegenüberliegenden unteren Ende (3) der zylindrische Raum (2) mit Ausnahme der Beruhigungskanäle (13 bis 18) geschlossen ist, wobei die Beruhigungskanäle (13 - 18) an ihren unten offenen Enden die Abgabeöffnungen bilden, und daß in dem Abschnitt des zylindrischen Raums (2) zwischen der Düsenöffnung (6) und den Beruhigungskanälen (13 - 18) die mischende Unterdruckkammer gebildet ist, in die die Zuleitung (9) des Luft-Milchgemischs aus der Vormischkammer mündet.

7. Vorrichtung nach Anspruch 6,
**dadurch gekennzeichnet,**
**daß** der Füllkern (10) in einen unteren Abschnitt (7) des zylindrischen Raums (2) der Düsenanordnung (1) eingesetzt ist.

8. Vorrichtung nach mindestens einem der vorangehenden Ansprüche,
**dadurch gekennzeichnet,**
**daß** die Beruhigungskanäle (14 bis 18) koaxial zu einer Rotationssymmetrieachse (8) durch die Unterdruckkammer angeordnet sind.

9. Vorrichtung nach einem der vorangehenden Ansprüche,
**dadurch gekennzeichnet,**
**daß** die Düsenöffnung (6) in der Düsenanordnung (1) an einem oberen Ende (4) der Unterdruckkammer (19, 22) angeordnet ist, welches dem unteren Ende der Unterdruckkammer (2) gegenüberliegt, an dem sich der Unterdruckkammerausgang mit den Beruhigungskanälen (13 bis 18) befindet.

10. Vorrichtung nach einem der vorangehenden Ansprüche,
**gekennzeichnet durch**
eine düsenförmige Ausbildung der Zuleitung (9) des Milch-Luftgemischs.

## Claims

1. Apparatus for proceeding frothed milk for cappuccino comprising a nozzle arrangement (1, 21) disposed downstream of a steam supply line, having a mixing low-pressure chamber (19, 22) into which a steam nozzle opening (6) is opened and into which discharges a feeder (9) of an air-milk mixture from a premixing chamber, said premixing chamber being connected with an air channel and a milk feeder, and having an calming portion at a low-pressure chamber outlet, wherein one end of said calming portion forms at least one discharge opening for discharging a steam-air milk mixture to the outside,
**characterized in**
**that** said calming portion comprises at least three calming channels (13 through 18) parallel in flow direction each forming at one open end a discharge opening for discharging a steam-air milk mixture partial flow to the outside,
**that** said calming channels (13 through 18) are formed out, substantially spaced in parallel relative to each other, from a substantially cylindrical filling core (10) which is inserted downstream of said low-pressure chamber (19, 22) into said nozzle arrangement (1), and
**that** the inside diameter of the cross section of each of said calming channels (13 through 18) is dimensioned in a relation to the length thereof which amounts to 1 to at least 10, divided in total by the number of calming channels (13 through 18).

2. Apparatus according to claim 1,
**characterized in**
**that** said at least three calming channels (13 through 18) are provided as to have substantially equal flow cross sections relative to each other and equal distances relative to each other.

3. Apparatus according to at least one of claims 1 and 2,
**characterized in**
**that** said calming channels (13 through 18) are formed-out at the outside from said substantially cylindrical filling core (10) at equal circumferential distances and substantially in parallel relative to a rotational symmetry axis (8) of said filling core.

4. Apparatus according to at least one of claims 1 to 3,
**characterized in**
**that** said filling core (10) is shaped as having a cylindrical main section (11) and a dome-shaped end (12) facing said low-pressure chamber (19, 22), and that said calming channels (13 through 18) formed out from said cylindrical main section extend over said dome-shaped section (12) and are recessed in it in an elliptical fashion.

5. Apparatus according to at least one of claims 1 to 4,
**characterized in**
**that** said low-pressure chamber outlet consists of said calming channels (13 - 18) disposed in parallel relative to the flow direction.

6. Apparatus according to at least one of claims 1 to 4,
**characterized in**
**that** said nozzle arrangement (1) comprises a cylindrical space (2), that an upper end of said cylindrical space (2) except for the nozzle opening is closed, that at a lower end (3) facing said upper end (4) said cylindrical space (2) is closed except for said calming channels (13 through 18), wherein said calming channels (13 - 18) form the discharge openings at the lower open ends thereof, and that in the section of said cylindrical space (2) between said nozzle opening (6) and said calming channels (13 - 18) said mixing low-pressure chamber is formed into which joins the feeder (9) of the air-milk mixture from said pre-mixing chamber

7. Apparatus according to claim 6,
**characterized in**
**that** said filling core (10) is inserted into a lower section (7) of said cylindrical space (2) of said nozzle arrangement (1).

8. Apparatus according to at least one of the foregoing claims,
**characterized in**
**that** said calming channels (14 through 18) are disposed coaxially relative to a rotational symmetry axis (8) through said low-pressure chamber.

9. Apparatus according to one of the foregoing claims,
**characterized in**
said nozzle opening (6) in said nozzle system (1) is disposed at an upper end (4) of said low-pressure chamber (19, 22), which faces said lower end of said low-pressure chamber (2) at which the low-pressure chamber outlet having said calming channels (13 through 18) is disposed.

10. Apparatus according to one of the foregoing claims,
**characterized by**
a nozzle-like shape of the feeder (9) of the milk-air mixture.

## Revendications

1. Dispositif destiné à la production de mousse de lait pour cappuccino, comportant un ensemble à buse (1, 21) disposé en aval d'un conduit d'amenée de vapeur et comportant une chambre de dépression mélangeuse (19, 22), dans laquelle un orifice d'injection de vapeur (6) de la buse est ouvert et dans laquelle débouche un conduit (9) d'amenée d'un mélange air-lait provenant d'une chambre de pré-mélange, la chambre de pré-mélange étant reliée à un canal à air et un conduit d'amenée de lait, ainsi qu'un parcours de tranquillisation à une sortie de la chambre de dépression, une extrémité du parcours de tranquillisation formant au moins un orifice de décharge destiné à délivrer un mélange vapeur-air-lait à l'extérieur,
**caractérisé**
**en ce que** le parcours de tranquillisation comprend au moins trois canaux de tranquillisation (13 à 18) parallèles dans le sens de l'écoulement, qui forment chacun, à une extrémité ouverte, un orifice de décharge destiné à délivrer un flux partiel de mélange vapeur-air-lait à l'extérieur,
**en ce que** les canaux de tranquillisation (13 à 18) sont formés, en étant sensiblement parallèles l'un à l'autre dans l'espace, dans un noyau de remplissage (10) sensiblement cylindrique, qui est inséré dans l'ensemble à buse (1) en aval de la chambre de dépression (19, 22), et
**en ce que** le diamètre libre de la section transversale de chacun des canaux de tranquillisation (13 à 18) est dimensionné de façon à être dans un rapport à la longueur de ce dernier, qui soit de 1 à au moins 10, divisé globalement par le nombre des canaux de tranquillisation (13 à 18).

2. Dispositif selon la revendication 1,
**caractérisé**
**en ce que** les trois, au moins, canaux de tranquillisation (13 à 18) sont prévus avec des sections transversales d'écoulement sensiblement identiques entre elles et à intervalles égaux.

3. Dispositif selon l'une au moins des revendications 1 et 2,
**caractérisé**
**en ce que** les canaux de tranquillisation (13 à 18) sont formés extérieurement dans le noyau de remplissage (10) sensiblement cylindrique, à intervalles égaux dans le sens circonférentiel et sensiblement parallèlement à un axe de symétrie de révolution (8) du noyau de remplissage.

4. Dispositif selon l'une au moins des revendications 1 à 3,
**caractérisé**
**en ce que** le noyau de remplissage (10) est doté d'un tronçon principal cylindrique (11) et d'une extrémité en forme de dôme (12), tournée vers la chambre de dépression (19, 22), et en ce que les canaux de tranquillisation (13 à 18), formés dans le tronçon principal cylindrique, s'étendent par-dessus le tronçon en forme de dôme (12) et sont creusés dans celui-ci sous une forme elliptique.

5. Dispositif selon l'une au moins des revendications 1 à 4,
**caractérisé**
**en ce que** la sortie de la chambre de dépression est constituée par les canaux de tranquillisation (13 à 18) positionnés parallèlement l'un à l'autre dans le sens de l'écoulement.

6. Dispositif selon l'une au moins des revendications 1 à 4,
**caractérisé**
**en ce que** l'ensemble à buse (1) comprend un espace cylindrique (2), en ce qu'une extrémité supérieure de l'espace cylindrique (2), exception faite de l'orifice de la buse, est fermée, en ce qu'à une extrémité inférieure (3) opposée à l'extrémité supérieure (4), l'espace cylindrique (2), exception faite des canaux de tranquillisation (13 à 18), est fermé, les canaux de tranquillisation (13 à 18) formant alors, à leurs extrémités ouvertes vers le bas, les orifices de décharge, et en ce que dans la partie de l'espace cylindrique (2) située entre l'orifice (6) de la buse et les canaux de tranquillisation (13 à 18), est formée la chambre de dépression mélangeuse, dans laquelle débouche le conduit (9) d'amenée du mélange air-lait provenant de la chambre de pré-mélange.

7. Dispositif selon la revendication 6,
**caractérisé**
**en ce que** le noyau de remplissage (10) est inséré dans une partie inférieure (7) de l'espace cylindrique (2) de l'ensemble à buse (1).

8. Dispositif selon l'une au moins des revendications précédentes,
**caractérisé**
**en ce que** les canaux de tranquillisation (13 à 18) sont disposés coaxialement à un axe de symétrie de révolution (8) passant à travers la chambre de dépression.

9. Dispositif selon l'une des revendications précédentes,
**caractérisé**
**en ce que**, dans l'ensemble à buse (1), l'orifice (6) de la buse est disposé à une extrémité supérieure (4) de la chambre de dépression (19, 22), qui est opposée à l'extrémité inférieure de la chambre de dépression (2), au niveau de laquelle se trouve la sortie de la chambre de dépression avec les canaux de tranquillisation (13 à 18).

10. Dispositif selon l'une des revendications précédentes,
**caractérisé par**
une configuration en forme de buse du conduit (9) d'amenée du mélange lait-air.
